# EUROPEAN PATENT SPECIFICATION

(11) **EP 0 390 568 B1**
(45) Date of publication and mention of the grant of the patent: **13.07.1994**
(21) Application number: 90303379.3
(22) Date of filing: 29.03.1990
(51) Int. Cl.: B60R 13/06

(54) **Covered welt for vehicle**
Beschichtete Fugendeckleiste
Couvre-joint avec revêtement

(30) Priority: 29.03.1989 JP 76909/89
(43) Date of publication of application: 03.10.1990
(73) Proprietor: KINUGAWA RUBBER INDUSTRIAL CO., LTD., Chiba-shi Chiba-ken (JP)
(72) Inventor: Karashima, Hiroki, c/o KINUGAWA RUBBER IND.CO. LTD, Chiba-shi, Chiba-ken (JP); Yamaguchi, Toshiaki, KINUGAWA RUBBER IND.CO. LTD., Chiba-shi, Chiba-ken (JP)
(74) Representative: Blanco White, Henry Nicholas

(56) References cited:
- US-A- 4 656 086
- PATENT ABSTRACTS OF JAPAN vol. 12, no. 91 (M-679)(2938) 24 March 1988;& JP-A-62 227837 (TOYODA GOSEI CO LTD) 06 October 1987
- PATENT ABSTRACTS OF JAPAN vol. 14, no. 75 (M-934)(4018) 13 February 1990;& JP-A-1293249 (TOYODA GOSEI CO LTD) 27 November 1989

## Description

The present invention relates generally to a covered welt for covering edges of an opening of a vehicle, for example.

A covered welt which is typically attached to an inner peripheral edge of an opening of a vehicle to be sealed by, for example, a closed door, is well known in the art. Such a covered welt is usually formed with a U-shaped portion in the cross section thereof, a plurality of inner lips which are integrally formed on inner surfaces of side walls of the U-shaped portion, a curved cover lip which extends outwardly from the side wall of the U-shaped portion for receiving a distal portion of a roof garnish, and a C-shaped sponge rubber seal which is attached to the other side wall. The U-shaped portion receives a flange which is bonded to an inner panel and an outer panel of a roof side rail of a vehicle body with the inner lips of the U-shaped portion tightly engaging the flange. The C-shaped sponge rubber seal is elastically deformable against shock caused by inner peripheral edges of a door when the door is closed. Fabric is attached over an outer surface ranging from an end of the sponge rubber to an end of the curved cover lip, and is bonded by a pre-applied adhesive which is disposed all over the outer surface.

As an adhesive, a two-part adhesive containing a heat resistant curing agent or a hot-melt adhesive, for example, is typically used.

However, bonding of the fabric to the sponge rubber seal using a two-part adhesive or a hot-melt adhesive requires the fabric to remain pressed against the surface of the sponge rubber seal until the adhesive is hardened, due to lack of coking properties and lack of sufficient adhesion between the fabric and the rubber surface at the beginning of bonding. This results in complicated bonding operations and serious operational efficiency problems.

Additionally, a two-part adhesive must be bonded within a curing time (pot life) during reaction of the two parts of the adhesive because the adhesive strength soon disappears due to curing after mixing the two agents of the adhesive. Control of pot life is dificult and results in complicated bonding operations.

Hot-melt adhesives become extremely hard after attachment to the fabric, with the result that the fabric is tightly attached to the U-shaped portion and the sponge rubber seal, thereby preventing relative movement therebetween. For that reason, if the U-shaped portion is bent along an edge of an opening of a vehicle when it is installed, the fabric does not follow the bend, causing tensile forces to occur. It will be thus noted that separation between the fabric and the curved cover lip tends to occur, resulting in difficult installation. Further, an elastic reaction of the sponge rubber seal caused by the hardening of the adhesive results in excessive elasticity and thereby, poor sealing for doors, windows, etc.

It is accordingly a general object of the present invention to avoid the disadvantages of the prior art.

It is another object of the invention to provide a covered welt which is manufactured easily without compromising the mechanical properties thereof.

US-A-4 656 086 discloses a welt with a thermoplastic substrate extruded onto a metal reinforcing member. The substrate is wrapped with foam-backed cloth while it is still hot enough that either the foam becomes embedded in the still-molten substrate the foam melts and bonds to the substrate.

JP-A-62 227837 (Patent Abstracts of Japan, vol. 12, no. 91 (M-679)[2938]) on which the preamble of claim 1 is based, discloses a welt in which a strip portion is covered with a cloth that has previously been given a backing of thermoplastic material. The cloth is heated, causing the thermoplastic backing to melt and bond to the underlying strip portion.

The invention provides a welt for a vehicle comprising: a seal member contoured for covering an edge of an opening of the vehicle; fabric wrapping around a surface of the seal member; and an adhesive layer provided between the fabric and the surface of the seal member; characterized in that the adhesive layer includes first and second layers, the first layer interfacing between each longitudinal edge of the fabric and corresponding areas of the surface of the seal member to bond fixedly therebetween, the second layer comprising a pressure sensitive adhesive layer provided between the seal member and the fabric to hold therebetween so as to maintain an interfacing condition to allow the fabric to move relative to the seal member when the seal member is bent.

The invention also provides a method for attaching fabric to a seal member to form a welt, comprising wrapping the fabric around a surface of the seal member with an adhesive layer between them to bond the fabric to the seal member; characterised by the steps of applying a pressure sensitive adhesive to a main area of the seal member, wrapping the main area of the seal member with the fabric to attach the fabric closely to the seal member, and applying another adhesive to both sides of the fabric to fixedly bond between the sides and the seal member.

One form of welt constructed in accordance with the present invention will now be described by way of example with reference to the accompanying drawings, in which:

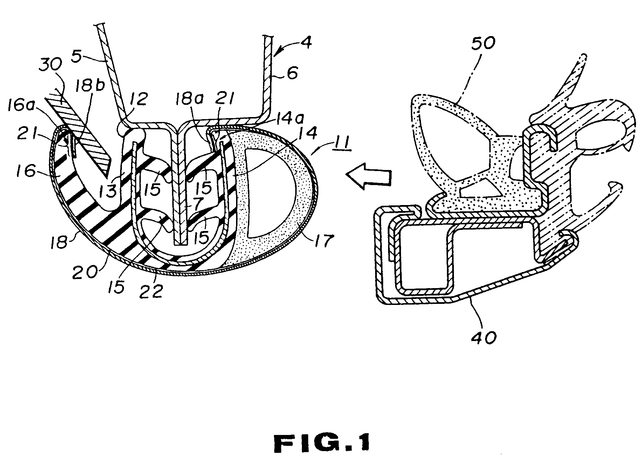

Fig. 1 is a cross sectional view which shows a covered welt according to the invention, installed on a flange of an opening of a vehicle.

Referring now to Fig. 1, one form of covered welt indicated generally by the reference numeral 11 constructed in accordance with the invention covers an upper edge 7 which is bonded with an outer side panel 6 and an inner side panel 5 of a roof side rail, indicated generally by a reference number 4, of a vehicle body. The welt 11 includes a strip portion 12 that is U-shaped in cross section, a plurality of inner lips 15 which are integrally formed on inner surfaces of side walls 13 and 14 of the U-shaped strip portion, a curved cover lip 16 which extends outwardly from the side wall 13 of the U-shaped strip portion for receiving a distal edge portion of a roof garnish 30, a C-shaped sponge rubber seal 17 which is attached to the side wall 14, and a fabric strip 18 which is bonded over an area extending from the sponge seal 17 to the curved cover lip 16. The sponge rubber seal 17 is elastically deformable against shock caused by an inner edge of a door panel 40 when being closed. A weatherstrip 50 is attached to an upper portion of the door panel 40 for sealing between a door and the outer side panel 6.

The U-shaped strip portion 12, the inner lips 15, and the curved cover lip 16 are made of rubber, or a synthetic resin such as polyvinyl chloride (PVC).

The two side portions 18a and 18b of the fabric strip 18 are bonded to areas 14a and 16a inside the top ends of the side wall 14 of the U-shaped strip portion 12 and the cover lip 16, respectively, by adhesives 21. This adhesive 21 may be a conventional two-part urethane or epoxy adhesive, or a hot-melt urethane, nylon, polyester, or EVA adhesive. Other areas of the fabric 18, other than the edge portions 18a and 18b, are bonded to an outwardly exposed outer surface 20 extending from the top of the curved cover lip 16 to the top of the side wall 14, via the sponge rubber seal 17 and the U-shaped strip, by a pressure sensitive adhesive 22. This adhesive may be acrylic, copolymer or polyvinyl ether.

In attaching the fabric 18 to the outer surface 20 of the curved cover lip 16, and the sponge rubber seal 17, the pressure sensitive adhesive 22 is pre-applied on all areas of the outer surface 20. Subsequently, the fabric 18 is wrapped about the outer surface 20 and is stuck closely thereon by means of the pressure sensitive adhesive 22. With this arrangement, the ends 18a and 18b of the fabric 18 are attached on the inside areas 14a and 16a of the side wall 14 of the U-shaped strip portion 12 and of the curved cover lip 16, respectively, by the adhesive 21. As for the adhesive 21, when using a two-part adhesive, it is applied onto outer surfaces of the side portions 18a and 18b of the fabric 18 which have been wrapped inwardly about the inside areas 16a and 14a and allowed to harden. When using a hot-melt adhesive, is applied to the side portions 18a and 18b in the same manner as above and is then heated by a heat plate or a welder to fixedly bond the fabric 18 thereto. Alternatively, application of the hot-melt adhesive may be effected in a manner in which it is pushed from a die with extrusion of the welt 11 therefrom. Additionally, the hot-melt adhesive may be pre-applied to the side portions 18a and 18b of the fabric 18 and after wrapping the fabric about the curved cover lip 16 to the sponge rubber seal 17, it is then heated to bond.

In the bonding operations the fabric 18 closely contacts the outer surface 20 by means of the pressure sensitive adhesive 22, this prevents it from being separated from the outer surface 20, and thus holding of the fabric against the outer surface until the adhesive is hardened is unnecessary. It will be appreciated that the bonding operation for the fabric is very easy. Further, the control of the pot life of the two-part adhesive is not necessary.

After the fixing of the side edge portions 18a and 18b of the fabric 18, the fabric is able to move relative to the outer surface 20 as the areas other than the ends 18a and 18b are bonded thereon by the flexibly deformable pressure-sensitive adhesive 22. In other words, the fabric is deformable flexily according to deformation of the welt when it is bent. Therefore, when the welt is installed on a flange of an opening of a vehicle body, the construction of the welt allows the U-shaped strip portion 12 to be folded freely without tensioning by the fabric, providing easy installation. Further, relative movement between the fabric 18 and the sponge rubber seal 17 prevents the elastic reaction of the seal from increasing, providing appropriate closing operation of doors.

## Claims

1. A welt for a vehicle comprising: a seal member (12 to 17) contoured for covering an edge of an opening of the vehicle; fabric (18) wrapping around a surface (20) of the seal member; and an adhesive layer (21, 22) provided between the fabric (18) and the surface (20) of the seal member (12 to 17); characterized in that the adhesive layer includes first and second layers, the first layer (21) interfacing between each longitudinal edge (18a, 18b) of the fabric (18) and corresponding areas (14a, 16a) of the surface of the seal member (12 to 17) to bond fixedly therebetween, the second layer (22) comprising a pressure sensitive adhesive layer provided between the seal member (12, 16, 17) and the fabric (18) to hold therebetween so as to maintain an interfacing condition to allow the fabric (18) to move relative to the seal member (12 to 17) when the seal member is bent.

2. A welt as claimed in claim 1, characterised in that the seal member includes a strip portion (12) having spaced apart outer side walls and an elastically deformable seal (17) attached to a side surface of the said strip portion (12), the said fabric covering an area extending over the said seal (17) and the said strip portion (12).

3. A welt as claimed in claim 2, wherein the said strip portion (12) includes a U-shaped portion (12 to 14) formed in the lengthwise direction of the strip portion for wrapping about the edge (7) of the vehicle opening, a plurality of lips (15) formed on surfaces of inner side walls of the U-shaped portion opposite the outer side walls, and a curved cover lip (16), the U-shaped portion having a first outer side wall to which the said elastically deformable seal is attached, the curved cover lip extending outwardly from a second outer side wall of the U-shaped portion, opposite the first outer side wall, the said fabric being attached to an area ranging from an end (16a) of the curved cover lip (16) to an end of the elastically deformable seal (17).

4. A welt as claimed in claim 2 or claim 3, wherein the strip portion (12 to 15) is made of rubber.

5. A welt as claimed in claim 2 or claim 3, wherein the strip portion (12 to 15) is made of synthetic resin.

6. A welt as claimed in any one of claims 1 to 5, wherein the first layer (21) of the adhesive layer is provided with a two-part adhesive or a hot melt adhesive and the second, pressure sensitive layer (22) of the adhesive layer is provided with an acrylic ether, a copolymer or a polyvinyl ether adhesive.

7. A method for attaching a fabric (18) to a seal member (12 to 17) to form a welt, comprising wrapping the fabric (18) around a surface (20) of the seal member with an adhesive layer (21, 22) between them to bond the fabric to the seal member; characterised by the steps of: applying a pressure sensitive adhesive (22) to a main area of the seal member (12 to 17); wrapping the said main area of the seal member with the fabric (18) to attach the fabric closely to the seal member; and applying another adhesive (21) to both side edge portions (18a, 18b) of the fabric to fixedly bond between the edges and the seal member.

8. A method as claimed in claim 7, wherein the said other adhesive (21) is a two-part adhesive or a hot melt adhesive and the said pressure sensitive adhesive (22) is an acrylic, a copolymer or a polyvinyl ether.

## Patentansprüche

1. Fugendeckleiste für ein Fahrzeug, die umfaßt: ein Abdichtungselement (12 bis 17), das so geformt ist, daß es einen Rand einer Öffnung des Fahrzeugs abdeckt; Gewebe (18), das eine Oberfläche (20) des Abdichtungselementes umhüllt; sowie eine Klebeschicht (21, 22), die sich zwischen dem Gewebe (18) und der Oberfläche (20) des Abdichtungselements (12 bis 17) befindet; **dadurch gekennzeichnet,** daß die Klebeschicht eine erste und eine zweite Schicht enthält, wobei sich die erste Schicht (21) zwischen jeder Längskante (18a, 18b) des Gewebes (18) und entsprechenden Bereichen (14a, 16a) der Oberfläche des Abdichtungselementes (12 bis 17) befindet und sie fest verklebt, und die zweite Schicht (22) eine druckempfindliche Klebeschicht umfaßt, die sich zwischen dem Abdichtungselement (12, 16, 17) und dem Gewebe (18) befindet und sie aneinanderhält, so daß ein Verbindungszustand hergestellt wird, der es dem Gewebe (18) ermöglicht, sich in bezug auf das Abdichtungselement (12 bis 17) zu bewegen, wenn das Abdichtungselement gebogen wird.

2. Fugendeckleiste nach Anspruch 1, **dadurch gekennzeichnet,** daß das Abdichtungselement einen Streifenabschnitt (12) enthält, der voneinander beabstandete äußere Seitenwände aufweist, sowie eine elastisch verformbare Abdichtung (17), die an einer Seitenfläche des Streifenabschnitts (12) angebracht ist, wobei das Gewebe einen Bereich bedeckt, der sich über die Abdichtung (17) und den Streifenabschnitt (12) erstreckt.

3. Fugendeckleiste nach Anspruch 2, wobei der Streifenabschnitt (12) einen U-förmigen Abschnitt (12 bis 14) enthält, der in der Längsrichtung des Streifenabschnitts ausgeformt ist und einen Rand (7) der Fahrzeugöffnung umhüllt, eine Vielzahl von Lippen (15), die an Flächen der inneren Seitenwände des U-förmigen Abschnitts gegenüber den äußeren Seitenwänden ausgeformt sind, sowie eine gekrümmte Abdecklippe (16), wobei der U-förmige Abschnitt eine erste äußere Seitenwand aufweist, an der die elastisch verformbare Abdichtung angebracht ist, wobei sich die gekrümmte Abdecklippe von einer zweiten äußeren Seitenwand des U-förmigen Abschnitts gegenüber der ersten äußeren Seitenwand nach außen erstreckt, wobei das Gewebe an einem Bereich angebracht ist, der sich von einem Ende (16a) der gekrümmten Abdecklippe (16) zu einem Ende der elastisch verformbaren Abdichtung (17) erstreckt.

4. Fugendeckleiste nach Anspruch 2 oder Anspruch 3, wobei der Streifenabschnitt (12 bis 15) aus Gummi besteht.

5. Fugendeckleiste nach Anspruch 2 oder Anspruch 3, wobei der Streifenabschnitt (12 bis 15) aus Syntheseharz besteht.

6. Fugendeckleiste nach einem der Ansprüche 1 bis 5, wobei die erste Schicht (21) der Klebschicht mit einem Zwei-Komponenten-Kleber oder einem Schmelzkleber versehen ist, und die zweite, druckempfindliche Schicht (22) der Klebschicht mit einem Acrylether-, einem Copolymer- oder einem Polyvinylether-Klebstoff versehen ist.

7. Verfahren zur Anbringung eines Gewebes (18) an einem Abdichtungselement (12 bis 17), um eine Fugendeckleiste herzustellen, das das Hüllen des Gewebes (18) um eine Oberfläche (20) des Abdichtungselementes umfaßt, wobei sich eine Klebschicht (21, 22) zwischen ihnen befindet, die das Gewebe mit dem Abdichtungselement verbindet; **gekennzeichnet durch** die Schritte des Auftragens eines druckempfindlichen Klebstoffs (22) auf einen Hauptbereich des Abdichtungselementes (12 bis 17), des Umhüllens des Hauptbereiches des Abdichtungselementes mit dem Gewebe (18), um das Gewebe dicht an dem Abdichtungselement anzubringen, und des Auftragens eines weiteren Klebstoffs (21) auf beide Seitenkanten (18a, 18b) des Gewebes, der die Seiten und das Abdichtungselement fest verbindet.

8. Verfahren nach Anspruch 7, wobei der andere Klebstoff (21) ein Zwei-Komponenten-Kleber oder ein Schmelzkleber ist, und der druckempfindliche Klebstoff (22) aus Acryl, Copolymer oder Polyvinylether besteht.

## Revendications

1. Couvre-joint pour un véhicule comportant : un élément formant joint (12 à 17) profilé pour couvrir un bord d'une ouverture du véhicule ; une étoffe (18) enveloppée autour d'une surface (20) de l'élément formant joint ; et une couche adhésive (21,22) prévue entre l'étoffe (18) et la surface (20) de l'élément formant joint (12 à 17) ; caractérisé en ce que la couche adhésive comprend des première et seconde couches, la première couche (21) servant de doublure intermédiaire entre chaque bord longitudinal (18a, 18b) de l'étoffe (18) et des zones correspondantes (14a, 16a) de la surface de l'élément formant joint (12 à 17) pour les coller fixement, la seconde couche (22) comportant une couche adhésive sensible à la pression prévue entre l'élément formant joint (12, 16, 17) et l'étoffe (18) pour les tenir, de manière à maintenir une condition de doublure intermédiaire pour permettre à l'étoffe (18) de se déplacer par rapport à l'élément formant joint (12 à 17) lorsque l'élément formant joint est courbé.

2. Couvre-joint selon la revendication 1, caractérisé en ce que l'élément formant joint comprend une partie en bande (12) ayant des parois latérales externes écartées les unes des autres et un joint élastiquement déformable (17) attaché à une surface latérale de ladite partie en bande (12), ladite étoffe couvrant une zone s'étendant sur ledit joint (17) et ladite partie en bande (12).

3. Couvre-joint selon la revendication 2, caractérisé en ce que ladite partie en bande (12) comprend une partie en forme de U (12 à 14) formée dans la direction longitudinale de la partie en bande pour envelopper le bord (7) de l'ouverture du véhicule, une pluralité de lèvres (15) formées sur des surfaces de parois latérales internes de la partie en forme de U à l'opposé des surfaces latérales externes et une lèvre de recouvrement courbée (16), la partie en forme de U ayant une première paroi latérale externe à laquelle ledit joint élastiquement déformable est attaché, la lèvre de recouvrement courbée s'étendant vers l'extérieur à partir d'une seconde paroi latérale externe de la partie en forme de U à l'opposé de la première paroi latérale externe, ladite étoffe étant attachée sur une zone s'étendant à partir d'une extrémité (16a) de la lèvre de recouvrement courbée (16) jusqu'à une extrémité du joint élastiquement déformable (17).

4. Couvre-joint selon la revendication 2 ou 3, caractérisé en ce que la partie en bande (12 à 15) est réalisée en caoutchouc.

5. Couvre-joint selon la revendication 2 ou 3, caractérisé en ce que la partie en bande (12 à 15) est réalisée en résine synthétique.

6. Couvre-joint selon l'une quelconque des revendications 1 à 5, caractérisé en ce que la première couche (21) de la couche adhésive est pourvue d'une colle en deux parties ou d'une colle thermofusible, et la seconde couche sensible à la pression (22) de la couche adhésive est pourvue d'une colle acrylique éther, copolymère ou polyvinyle éther.

7. Procédé de fixation d'une étoffe (15) à un élément formant joint (12 à 17) pour former un couvre-joint, consistant à envelopper l'étoffe (15) autour d'une surface (20) de l'élément formant joint avec une couche adhésive (21, 22) entre eux pour coller l'étoffe à l'élément formant joint ; caractérisé par les étapes consistant à : appliquer une colle sensible à la pression (22) à une zone principale de l'élément formant joint (12 à 17) ; envelopper ladite zone principale de l'élément formant joint avec l'étoffe (18) pour attacher l'étoffe étroitement à l'élément formant joint ; et appliquer une autre colle (21) aux deux parties de bord latérales (18a, 18b) de l'étoffe pour coller fixement les bords à l'élément formant joint.

8. Procédé selon la revendication 7, caractérisé en ce que ladite autre colle (21) est une colle en deux parties ou une colle thermofusible et que ladite colle sensible à la pression (22) est acrylique, copolymère ou polvvinyle éther.
